# FASCICULE DE BREVET EUROPEEN

(11) **EP 3 736 081 B1**
(45) Date de publication et mention de la délivrance du brevet: **02.03.2022**
(21) Numéro de dépôt: 20168981.7
(22) Date de dépôt: 09.04.2020
(51) Int. Cl.: B23P 15/00, F01D 9/04, F01D 25/28, B25B 27/16, B23K 37/04

(54) **PROCEDE DE FABRICATION D'UN ELEMENT AUBAGE DE STATOR POUR UNE TURBOMACHINE ET OUTILLAGE POUR SA MISE EN OEUVRE**
HERSTELLUNGSVERFAHREN EINER STATORLEITSCHAUFEL FÜR EIN TURBOTRIEBWERK, UND WERKZEUG FÜR SEINE UMSETZUNG
METHOD FOR MANUFACTURING A STATOR BLADE ELEMENT FOR A TURBINE ENGINE AND TOOL FOR IMPLEMENTING THE SAME

(30) Priorité: 12.04.2019 FR 1903940
(43) Date de publication de la demande: 11.11.2020
(73) Titulaire: SAFRAN AIRCRAFT ENGINES, 75015 Paris (FR)
(72) Inventeur: BAILLY, Martial, Vincent, 77550 MOISSY-CRAMAYEL (FR); ROTTON, Dominique, Michel, 77550 MOISSY-CRAMAYEL (FR); HASTOY, Clémence, Joséphine, Mauricette, 77550 MOISSY-CRAMAYEL (FR)
(74) Mandataire: Gevers & Orès

(56) Documents cités:
- EP-A1- 3 132 887
- EP-A1- 3 381 604
- FR-A1- 2 989 414

## Description

### Domaine technique de l'invention

La présente invention concerne la fabrication d'un élément aubagé de stator pour une turbomachine, en particulier d'aéronef, ainsi qu'un outillage pour la mise en oeuvre de ce procédé.

### Arrière-plan technique

L'état de la technique comprend notamment les documents FR-A1 -2989414, EP-A1-3132887, EP-A1-3381604, GB-A-213512, US-A1-3414958 et US-A1- 1550651. Le document FR-A1-2989 414 décrit le préambule de la revendication 1.

Un élément aubagé de turbomachine a en général une forme générale annulaire autour d'un axe qui est l'axe longitudinal de la turbomachine. Un tel aubage comporte classiquement :
- une virole annulaire s'étendant autour de l'axe et comportant une bride annulaire de fixation s'étendant radialement vers l'extérieur à chacune de ses extrémités axiales, et
- une rangée annulaire d'aubes s'étendant autour de l'axe à l'intérieur de la virole et dont les extrémités radialement externes sont fixées à la virole.

Un élément aubagé de ce type peut être réalisé par usinage, fonderie, assemblage de pièces, etc. L'invention concerne ici la fabrication d'un élément aubagé comportant notamment le soudage des extrémités radialement externes des aubes à la virole.

On a constaté que ce soudage génère des rétreints liés aux contraintes internes à la pièce, qui provoquent des déformations de la structure, et en particulier des brides. Ces déformations doivent alors être reprises par les opérations d'usinage post soudage et notamment par tournage, surfaçage et perçage des brides.

Cependant, lorsqu'une aube fixée sur la virole n'est pas conforme, elle doit être remplacée par une nouvelle en usinant la virole pour retirer l'aube non conforme et en y soudant la nouvelle aube. Dans ce cas, la bride a déjà subi des opérations d'usinage post soudage de l'aube non conforme, et ne peut pas subir d'autres opérations d'usinage suite au soudage de la nouvelle aube.

Il existe donc un besoin de limiter voire de supprimer les effets des phénomènes de rétreints constatés lors du soudage des aubes sur la virole.

### Résumé de l'invention

La présente invention apporte une solution à ce besoin qui est simple, efficace et économique.

L'invention propose ainsi un procédé de fabrication d'un élément aubagé de stator pour une turbomachine, en particulier d'aéronef,

cet élément aubagé ayant une forme générale annulaire autour d'un axe et comportant :
- une virole annulaire s'étendant autour de l'axe et comportant une bride annulaire de fixation s'étendant radialement vers l'extérieur à chacune de ses extrémités axiales, et
- une rangée annulaire d'aubes s'étendant autour de l'axe à l'intérieur de la virole et dont les extrémités radialement externes sont fixées à la virole,
le procédé comprenant des étapes de soudage des extrémités radialement externes des aubes à la virole,
caractérisé en ce qu'il comprend :
i) avant le soudage d'une ou plusieurs aube(s) dans une zone circonférentielle de la virole, une étape de montage d'un outillage sur cette zone de la virole, entre les brides de la virole, cet outillage étant serré axialement contre ces brides de façon à exercer des forces de traction dans des directions axiales opposées sur ces brides, et
ii) après le soudage de cette ou ces aube(s), une étape de démontage de l'outillage,
les étapes i) et ii) étant répétées sur différentes zones circonférentielles de la virole de façon à fixer les aubes sur tout le pourtour de la virole.

Les forces exercées sur les brides par l'outillage ont pour but de déformer élastiquement au moins l'une des brides et la virole de façon ce que les déplacements ainsi obtenus compensent les rétreints qui s'exerceront lors du soudage. Les rétreints ne font alors que repositionner les brides et la virole dans leurs positions et formes d'origine. L'outillage permet donc, non pas d'annuler les rétreints, mais de supprimer leurs effets sur l'élément aubagé post soudage. Avantageusement, l'outillage est le moins encombrant possible d'une part pour être facilement manipulable et déplaçable entre les zones circonférentielles de la virole, et d'autre part pour ne pas gêner l'opération de soudage qui peut être réalisée en déplaçant une tête de soudage au voisinage ou entre des pièces de l'outillage.

Le procédé selon l'invention peut comprendre une ou plusieurs des caractéristiques et/ou étapes suivantes, prises isolément les unes des autres ou en combinaison les unes avec les autres :
- à chaque étape i), une première plaque de l'outillage est appliquée contre une face radiale de l'une des brides, une seconde plaque de l'outillage est appliquée contre une face radiale en regard de l'autre des brides, et des longueurs de vérins de liaison des plaques sont augmentées pour exercer lesdites forces sur les brides,
- lesdites première et seconde plaques ont une forme générale incurvée et sont disposées sur la virole de façon à ce que leur concavité soit orientée vers l'axe,
- au moins l'une desdites première et seconde plaques comprend des pions engagés dans des orifices des brides,
- l'augmentation des longueurs des vérins est réalisée par serrage de ridoirs,
- chaque aube comprend une pale reliée à son extrémité radialement externe à une plateforme destinée à être insérée dans un orifice traversant de forme complémentaire de la virole, entre les brides de cette virole, le bord périphérique de la plateforme étant soudé au bord périphérique en regard de la virole,
- le soudage est réalisé par laser ou par faisceau d'électrons.

La présente invention concerne encore un outillage amovible pour la mise en oeuvre du procédé de fabrication d'un élément aubagé de stator pour une turbomachine selon l'une des revendications précédentes, ledit élément aubagé ayant une forme générale annulaire autour d'un axe et comportant :
- une virole annulaire s'étendant autour de l'axe et comportant une bride annulaire de fixation s'étendant radialement vers l'extérieur à chacune de ses extrémités axiales, et
- une rangée annulaire d'aubes s'étendant autour de l'axe à l'intérieur de la virole et dont les extrémités radialement externes sont fixées à la virole, ledit outillage comprenant :
   - une première plaque destinée à être appliquée contre une face radiale d'une première bride de la virole annulaire et présentant une forme générale allongée et incurvée, avec une concavité destinée à être orientée vers l'axe,
   - une seconde plaque destinée à être appliquée contre une face radiale d'une seconde bride en regard de la première bride et présentant une forme générale allongée et incurvée, avec une concavité destinée à être orientée vers l'axe,
des vérins de liaison des plaques dont les longueurs sont modifiables de façon à pouvoir régler la distance inter-plaques, et
- des pions configurés pour être insérés dans des orifices des brides de manière à immobiliser ledit outillage en direction circonférentielle sur la virole.

L'outillage selon l'invention peut comprendre une ou plusieurs des caractéristiques suivantes, prises isolément les unes des autres ou en combinaison les unes avec les autres :
- les vérins sont du type à ridoirs,
- les vérins sont reliés par des liaisons rotulantes auxdites plaques.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une demi-vue schématique partielle en coupe axiale d'un élément aubagé de stator d'une turbomachine d'aéronef ;
[Fig. 2] la figure 2 est une vue schématique partielle de côté de l'élément de la figure 1 ;
[Fig. 3] la figure 3 est une vue similaire à celle de la figure 1 et montrant les rétreints constatés dans l'art antérieur lors d'une opération de soudage ;
[Fig. 4] la figure 4 est une vue similaire à celle de la figure 1 et montrant la déformation élastique appliquée sur l'élément pour compenser les effets des rétreints, conformément au procédé selon l'invention ;
[Fig. 5] la figure 5 est une vue schématique en perspective d'un outillage pour la mise en oeuvre du procédé selon l'invention ;
[Fig. 6] la figure 6 est une vue schématique partielle de côté de l'élément de la figure 1, qui est équipé de l'outillage de la figure 5 ; et
[Fig. 7] la figure 7 est un organigramme montrant différentes étapes du procédé selon l'invention.

### Description détaillée de l'invention

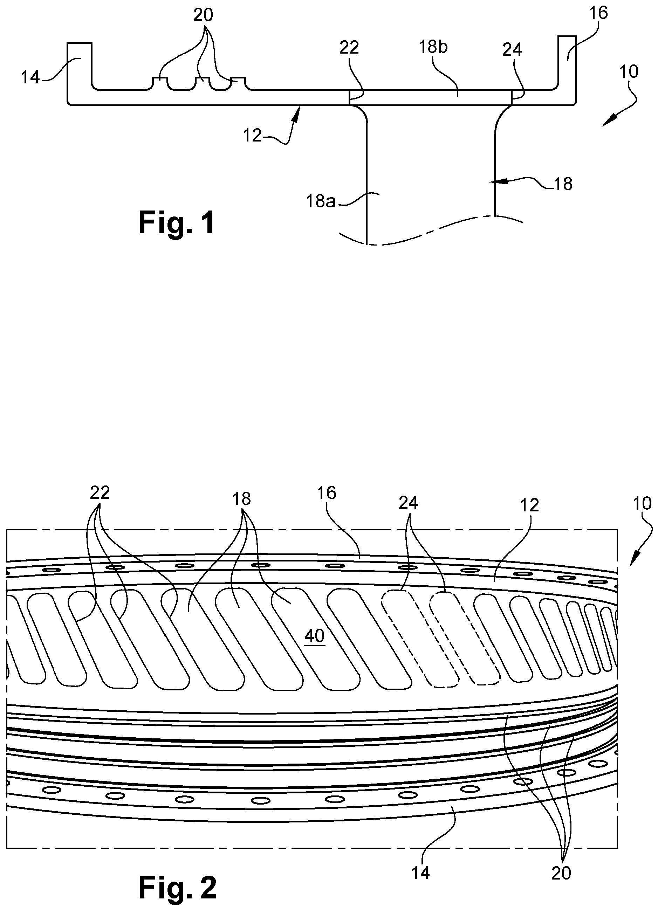

Les figures 1 et 2 représentent un élément aubagé de stator 10 d'une turbomachine d'aéronef, tel qu'un redresseur d'un compresseur basse pression de cette turbomachine.

Cet élément aubagé 10 comprend une virole annulaire 12 s'étendant autour d'un axe (non visible) et comportant une bride annulaire de fixation 14, 16 s'étendant radialement vers l'extérieur à chacune de ses extrémités axiales. L'élément aubagé 10 comprend en outre une rangée annulaire d'aubes 18 s'étendant autour de l'axe précité à l'intérieur de la virole 12 et dont les extrémités radialement externes sont fixées à la virole 12.

Dans l'exemple représenté, la virole 12 a une forme générale cylindrique mais qui peut en variante être tronconique. Des nervures annulaires de rigidification 20 peuvent être formées en saillie sur la surface cylindrique radialement externe de la virole 12.

Les extrémités radialement externes des aubes 18 sont fixées à la virole 12 par soudage, par exemple par laser ou par faisceau d'électrons. Pour cela, chaque aube 18 comprend une pale 18a dont l'extrémité radialement externe est reliée à une plateforme 18b qui a ici une forme générale parallélépipédique.

La virole 12 comprend une rangée annulaire d'orifices 22 traversants et donc débouchant sur ses surfaces cylindriques radialement interne et externe. Ces orifices 22 sont identiques et ont une forme et des dimensions déterminées pour recevoir les plateformes 18b des aubes 18.

L'épaisseur (ou la dimension radiale) de la plateforme 18b est sensiblement identique à l'épaisseur de la virole 12, au niveau de l'orifice 22. La plateforme 18b de chaque aube 18 est engagée dans un orifice 22 et est séparée par un faible jeu du bord périphérique de cet orifice. Ce jeu est destiné à être comblé par un cordon de soudure 24 s'étendant donc sur tout le pourtour de la plateforme 18b. Les bords périphériques de la plateforme 18b et de l'orifice 22 associé sont donc soudés l'un à l'autre par le cordon de soudure 24. Des cordons de soudure 24 sont schématiquement représentés par des traits pointillés à la figure 2.

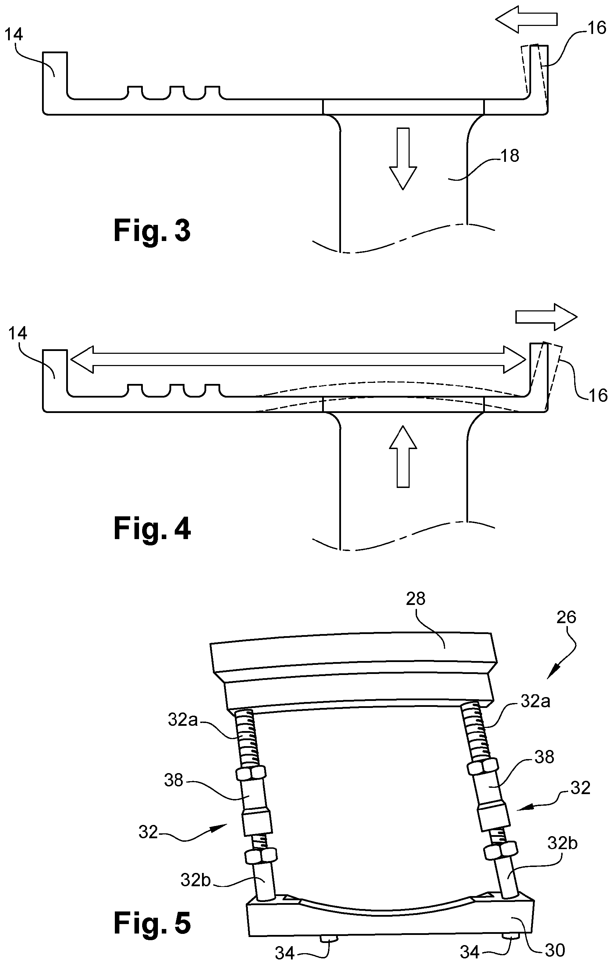

L'opération de soudage génère des contraintes thermiques importantes dans l'élément 10 qui génèrent des phénomènes de rétreints, schématiquement représentés par les flèches à la figure 3. La bride amont 14 ou à gauche sur le dessin est surdimensionnée et plus rigide que la bride aval 16 ou à droite, et cette dernière subit alors un rétreint (de quelques dixièmes de millimètre) qui se manifeste par une déformation de sa bride 16 dont la périphérie externe a tendance à s'incliner vers l'amont. Par ailleurs, les aubes 18 subissent également un rétreint (de quelques centièmes de millimètre) qui se manifeste par un déplacement des aubes radialement vers l'intérieur. L'invention propose de compenser les effets de ce rétreint en exerçant sur les brides 14, 16, préalablement à l'opération de soudage, des forces de traction (double flèche à la figure 4) qui sont orientées dans des directions axiales opposées. Ces forces déforment la bride aval 18 générant un léger mouvement d'une ou plusieurs aubes vers le haut. Cette déformation élastique permet de compenser au moins partiellement le rétreint lié à la soudure.

Ces forces de traction sont obtenues grâce à un outillage 26 représenté à la figure 5 et comportant :
- une première plaque 28 destinée à être appliquée contre une face radiale de l'une des brides, à savoir sur la face radiale aval de la bride amont 14 dans l'exemple représenté,
- une seconde plaque 30 destinée à être appliquée contre une face radiale en regard de l'autre des brides, à savoir sur la face radiale amont de la bride aval 16 dans cet exemple, et
- des vérins 32 de liaison des plaques 28, 30 dont les longueurs sont modifiables de façon à pouvoir régler la distance inter-plaques.

Les plaques 28, 30 ont une forme générale allongée et incurvée et sont destinées à être disposées sur la virole 12 de façon à ce que leur concavité soit orientée vers l'axe précité.

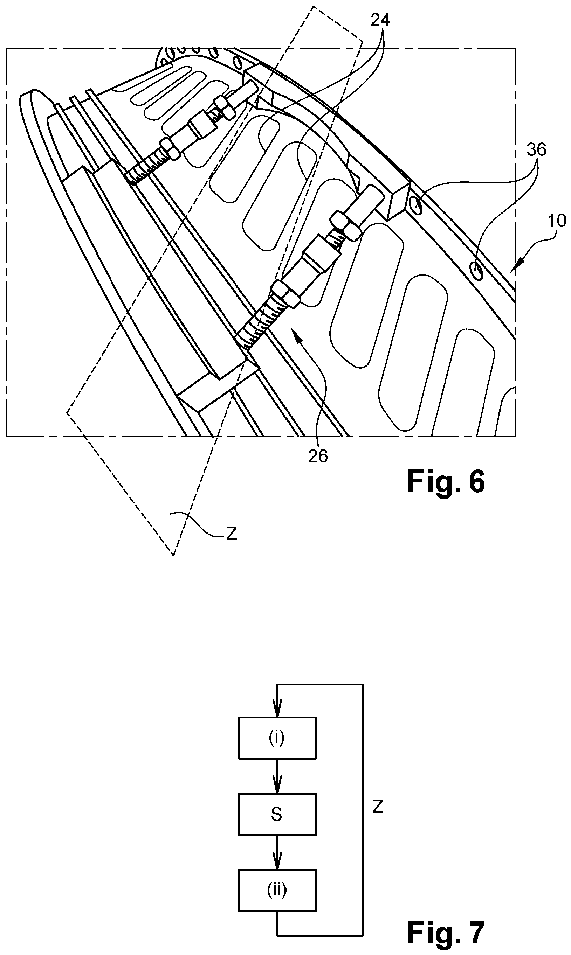

Au moins l'une des plaques 28, 30 comprend des pions 34 engagés dans des orifices 36 des brides, de façon à immobiliser l'outillage en direction circonférentielle sur la virole 12. Ces orifices 36 sont avantageusement ceux destinés à recevoir les vis de fixation de l'élément aubagé 10 à un autre élément de stator de la turbomachine (cf. figure 6).

Les vérins 32 sont au nombre de deux dans l'exemple représenté. Un des vérins 32 s'étend entre des premières extrémités longitudinales ou circonférentielles des plaques 28, 30 et l'autre des vérins s'étend entre des secondes extrémités longitudinales ou circonférentielles des plaques 28, 30. Les plaques 28, 30 ont de préférence des étendues circonférentielles identiques ou similaires.

Dans l'exemple représenté, chaque vérin 32 est du type à ridoir 38, et comprend une première tige filetée 32a dont une extrémité est reliée à l'une des plaques, de préférence par une liaison rotulante, et dont l'extrémité opposée est vissée dans le ridoir 38. Une seconde tige filetée 32b a une extrémité vissée dans ce ridoir 38 et l'autre extrémité opposée qui est reliée à l'autre des plaques, également de préférence par une liaison rotulante. Des écrous peuvent être vissés sur les tiges 32a, 32b, de chaque côté du ridoir 38, pour maintenir le ridoir dans une position donnée lorsque les écrous sont serrés.

Le vissage du ridoir 38 va provoquer le rapprochement des plaques et donc la réduction de la distance inter-plaques, et son dévissage provoquera l'éloignement des plaques 28, 30 et donc l'allongement de la distance inter-plaques.

Les pions 34 précités peuvent être formés par les extrémités des tiges filetées 32a, 32b qui traversent les plaques et peuvent être insérées dans les orifices 36 des brides 14, 16.

La figure 7 représente des étapes du procédé de fabrication selon l'invention. Une première étape (i) consiste à monter l'outillage 26 sur la surface cylindrique externe de la virole 12, entre les brides 14, 16, comme cela est visible à la figure 6. Pour cela, les vérins 32 sont raccourcis et l'outillage 26 est monté dans une première zone circonférentielle Z de la virole 12, par exemple pour le soudage de deux aubes 18. Comme cela est visible à la figure 6, le jeu périphérique à combler par le cordon de soudure 24 entre la plateforme 18b de l'aube et le bord périphérique de la virole 12 est accessible par un opérateur au moyen d'une tête de soudage qui peut passer entre les deux plaques 28, 30, d'une part, et entre les deux vérins 32, d'autre part. La figure 6 permet de montrer que deux aubes sont situées dans la zone circonférentielle et peuvent être soudées à travers l'outillage 26. L'outillage 26 est manipulé par l'opérateur de façon à augmenter la longueur des vérins 32, à exercer les forces précitées sur les brides 14, 16 de la virole 12 et à déformer la virole, comme expliqué dans ce qui précède.

L'opération de soudage (S) des deux aubes 18 situées dans la zone circonférentielle Z de la virole 12 peut alors avoir lieu.

Après refroidissement, l'outillage 26 est démonté (ii) et les étapes i, S et ii sont répétées plusieurs fois de façon à souder toutes les aubes 18 tout autour de la virole 12, c'est-à-dire sur toutes les zones circonférentielles (Zx). Si la virole comprend 2n aubes et si chaque zone circonférentielle Z couvre deux aubes, la virole comprend n zones et il faut répéter n fois les étapes i, S et ii.

Si nécessaire, le soudage peut être réalisé en protégeant la pièce ou du moins les cordons de soudure 24, par une atmosphère inerte par exemple.

## Revendications

1. Procédé de fabrication d'un élément aubagé (10) de stator pour une turbomachine, en particulier d'aéronef,
cet élément aubagé ayant une forme générale annulaire autour d'un axe et comportant :
- une virole annulaire (12) s'étendant autour de l'axe et comportant une bride annulaire de fixation (14, 16) s'étendant radialement vers l'extérieur à chacune de ses extrémités axiales, et
- une rangée annulaire d'aubes (18) s'étendant autour de l'axe à l'intérieur de la virole et dont les extrémités radialement externes sont fixées à la virole, le procédé comprenant des étapes de soudage des extrémités radialement externes des aubes à la virole,
**caractérisé en ce qu'**il comprend :
i) avant le soudage d'une ou plusieurs aube(s) dans une zone circonférentielle (Z) de la virole, une étape de montage d'un outillage (26) sur cette zone de la virole, entre les brides de la virole, cet outillage étant serré axialement contre ces brides de façon à exercer des forces de traction dans des directions axiales opposées sur ces brides, et
ii) après le soudage de cette ou ces aube(s), une étape de démontage de l'outillage,
les étapes i) et ii) étant répétées sur différentes zones circonférentielles (Zi) de la virole de façon à fixer les aubes sur tout le pourtour de la virole.

2. Procédé selon la revendication 1, dans lequel, à chaque étape i), une première plaque (28) de l'outillage (26) est appliquée contre une face radiale de l'une des brides (14), une seconde plaque (30) de l'outillage est appliquée contre une face radiale en regard de l'autre des brides (30), et des longueurs de vérins (32) de liaison des plaques sont augmentées pour exercer lesdites forces sur les brides.

3. Procédé selon la revendication 2, dans lequel lesdites première et seconde plaques (28, 30) ont une forme générale incurvée et sont disposées sur la virole (12) de façon à ce que leur concavité soit orientée vers l'axe.

4. Procédé selon la revendication 2 ou 3, dans lequel au moins l'une desdites première et seconde plaques (28, 30) comprend des pions (34) engagés dans des orifices (36) des brides (14, 16).

5. Procédé selon l'une des revendications 2 à 4 dans lequel l'augmentation des longueurs des vérins (32) est réalisée par serrage de ridoirs (38).

6. Procédé selon l'une des revendications précédentes, dans lequel chaque aube (18) comprend une pale (18a) reliée à son extrémité radialement externe à une plateforme (18b) destinée à être insérée dans un orifice (22) traversant de forme complémentaire de la virole (12), entre les brides (14, 16) de cette virole, le bord périphérique de la plateforme étant soudé au bord périphérique en regard de la virole.

7. Procédé selon l'une des revendications précédentes, dans lequel le soudage est réalisé par laser ou par faisceau d'électrons.

8. Outillage (26) amovible pour la mise en oeuvre du procédé de fabrication d'un élément aubagé (10) de stator pour une turbomachine selon l'une des revendications précédentes, ledit élément aubagé ayant une forme générale annulaire autour d'une axe et comportant :
- une virole annulaire (12) s'étendant autour de l'axe et comportant une bride annulaire de fixation (14, 16) s'étendant radialement vers l'extérieur à chacune de ses extrémités axiales, et
- une rangée annulaire d'aubes (18) s'étendant autour de l'axe à l'intérieur de la virole et dont les extrémités radialement externes sont fixées à la virole, ledit outillage comprenant :
- une première plaque (28) destinée à être appliquée contre une face radiale d'une première bride (14) de la virole annulaire (12) et présentant une forme générale allongée et incurvée, avec une concavité destinée à être orientée vers l'axe,
- une seconde plaque (30) destinée à être appliquée contre une face radiale d'une seconde bride (16) en regard de la première brides (14) et présentant une forme générale allongée et incurvée, avec une concavité destinée à être orientée vers l'axe,
- des vérins (32) de liaison des plaques dont les longueurs sont modifiables de façon à pouvoir régler la distance inter-plaques, et
- des pions (34) configurés pour être insérés dans des orifices (36) des brides (14, 16) de manière à immobiliser ledit outillage en direction circonférentielle sur la virole (12).

9. Outillage (26) selon la revendication 8, dans lequel les vérins (32) sont du type à ridoirs (38).

10. Outillage (26) selon la revendication 8 ou 9, dans lequel les vérins (32) sont reliés par des liaisons rotulantes auxdites plaques (28, 30).

## Patentansprüche

1. Verfahren zur Herstellung eines beschaufelten Statorelements (10) für eine Turbomaschine, insbesondere für ein Luftfahrzeug,
wobei das beschaufelte Element eine im Allgemeinen ringförmige Form um eine Achse aufweist und Folgendes umfasst:
- eine ringförmige Halterung (12), die sich um die Achse erstreckt und einen ringförmigen Befestigungsflansch (14, 16) umfasst, der sich an jedem ihrer axialen Enden radial nach außen erstreckt, und
- eine ringförmige Reihe von Schaufeln (18), die sich innerhalb der Halterung um die Achse erstrecken und deren radial äußere Enden an der Halterung befestigt sind, wobei das Verfahren die Schritte des Verschweißens der radial äußeren Enden der Schaufel mit der Halterung umfasst,
**dadurch gekennzeichnet, dass** es Folgendes umfasst:
i) vor dem Schweißen einer oder mehrerer Schaufeln in einem Umfangsbereich (Z) der Halterung einen Schritt des Anbringens eines Werkzeugs (26) an diesem Bereich der Halterung zwischen den Flanschen der Halterung, wobei dieses Werkzeug axial gegen diese Flanschen geklemmt wird, um Zugkräfte in entgegengesetzten axialen Richtungen auf die Flansche auszuüben, und
ii) nach dem Schweißen dieser Schaufel(n) einen Schritt der Abnahme des Werkzeugs,
wobei die Schritte i) und ii) an verschiedenen Umfangsbereichen (Zi) der Halterung wiederholt werden, um die Schaufeln über den gesamten Umfang der Halterung zu befestigen.

2. Verfahren nach Anspruch 1, worin bei jedem Schritt i) eine erste Platte (28) des Werkzeugs (26) gegen eine radiale Fläche eines der Flansche (14) angelegt wird, eine zweite Platte (30) des Werkzeugs gegen eine radiale Fläche angelegt wird, die dem anderen der Flansche (30) gegenüber liegt, und Längen von Plattenverbindungszylindern (32) vergrößert werden, um die besagten Kräfte auf die Flansche auszuüben.

3. Verfahren nach Anspruch 2, worin die besagten erste und zweite Platten (28, 30) eine im Allgemeinen gekrümmte Form aufweisen und an der Halterung (12) so angeordnet sind, dass ihre Konkavität zur Achse gerichtet ist.

4. Verfahren nach Anspruch 2 oder 3, worin zumindest eine der besagten ersten und zweiten Platten (28, 30) Zapfen (34) aufweist, die in Löcher (36) der Flansche (14, 16) eingreifen.

5. Verfahren nach einem der Ansprüche 2 bis 4, worin die Zylinderlängen (32) durch Anziehen von Spannschlössern (38) vergrößert werden.

6. Verfahren nach einem der vorstehenden Ansprüche, worin jede Schaufel (18) ein Schaufelblatt (18a) umfasst, das an seinem radial äußeren Ende mit einer Plattform (18b) verbunden ist, die dazu bestimmt ist, in eine Durchgangsöffnung (22) in komplementärer Form zur Halterung (12) zwischen den Flanschen (14, 16) dieser Halterung eingesetzt zu werden, wobei der Umfangsrand der Plattform mit dem Umfangsrand gegenüber der Halterung verschweißt ist.

7. Verfahren nach einem der vorstehenden Ansprüche, worin das Schweißen mittels Laser oder Elektronenstrahl durchgeführt wird.

8. Abnehmbares Werkzeug (26) zum Ausführen des Verfahrens zum Herstellen eines beschaufelten Statorelements (10) für eine Turbomaschine nach einem der vorstehenden Ansprüche, wobei das besagte beschaufelte Element eine im Allgemeinen ringförmige Form um eine Achse aufweist und Folgendes umfasst:
- eine ringförmige Halterung (12), die sich um die Achse erstreckt und einen ringförmigen Befestigungsflansch (14, 16) umfasst, der sich an jedem ihrer axialen Enden radial nach außen erstreckt, und
- eine ringförmige Reihe von Schaufeln (18), die sich innerhalb der Halterung um die Achse erstrecken und deren radial äußere Enden an der Halterung befestigt sind, wobei das Werkzeug Folgendes umfasst:
- eine erste Platte (28), die dazu bestimmt ist, gegen eine radiale Fläche eines ersten Flansches (14) der ringförmigen Halterung (12) angelegt zu werden, und die eine im Allgemeinen längliche und gekrümmte Form mit einer Konkavität aufweist, die dazu bestimmt ist, zur Achse ausgerichtet zu sein,
- eine zweite Platte (30), die dazu bestimmt ist, an eine radiale Fläche eines zweiten Flansches (16) gegenüber dem ersten Flansch (14) angelegt zu werden, und eine im Allgemeinen längliche und gekrümmte Form mit einer Konkavität aufweist, die dazu bestimmt ist, zur Achse ausgerichtet zu sein,
- Zylinder (32) zum Verbinden der Platten, deren Längen so verändert werden können, dass der Abstand zwischen den Platten eingestellt werden kann, und
- Zapfen (34), die konfiguriert sind, um in Löcher (36) der Flansche (14, 16) eingesetzt zu werden, um das besagte Werkzeug in Umfangsrichtung an der Halterung (12) zu blockieren.

9. Werkzeug (26) nach Anspruch 8, worin die Zylinder (32) vom Spannschloss-Typ (38) sind.

10. Werkzeug (26) nach Anspruch 8 oder 9, worin die Zylinder (32) durch Kugelverbindungen mit den besagten Platten (28, 30) verbunden sind.

## Claims

1. A method of manufacturing a bladed stator element (10) for a turbomachine, in particular for an aircraft,
this bladed element having a general annular shape around an axis and comprising:
- an annular shell (12) extending around the axis and comprising an annular fixing flange (14, 16) extending radially outwardly at each of its axial ends, and
- an annular row of vanes (18) extending around the axis inside the shell and whose radially outer ends are fixed to the shell,
the method comprising the steps of welding the radially outer ends of the vanes to the shell,
**characterized in that** it comprises:
i) prior to welding one or more vane(s) in a circumferential zone (Z) of the shell, a step of mounting a tool (26) on this zone of the shell, between the flanges of the shell, this tool being clamped axially against these flanges so as to exert tensile forces in opposite axial directions on these flanges, and
(ii) after the welding of this or these vane(s), a step of dismantling the tool,
the steps i) and ii) being repeated on different circumferential zones (Zi) of the shell so as to fix the vanes all around the shell.

2. The method according to claim 1, wherein in each step i) a first plate (28) of the tool (26) is applied against a radial face of one of the flanges (14), a second plate (30) of the tool is applied against a radial face facing the other of the flanges (30), and lengths of cylinders (32) for connecting the plates are increased to exert said forces on the flanges.

3. The method according to claim 2, wherein said first and second plates (28, 30) have a general curved shape and are arranged on the shell (12) so that their concavity is oriented towards the axis.

4. The method according to claim 2 or 3, wherein at least one of said first and second plates (28, 30) comprises pins (34) engaged in holes (36) of the flanges (14, 16).

5. The method according to any one of claims 2 to 4 wherein the increase of the lengths of the cylinders (32) is achieved by clamping of rigging screws (38).

6. The method according to any one of the preceding claims, wherein each vane (18) comprises a blade (18a) connected at its radially outer end to a platform (18b) intended to be inserted in a through hole (22) of complementary shape of the shell (12), between the flanges (14, 16) of this shell, the peripheral edge of the platform being welded to the peripheral edge facing the shell.

7. The method according to any one of the preceding claims, wherein the welding is achieved by laser or electron beam.

8. A removable tool (26) for carrying out the method of manufacturing a bladed stator element (10) for a turbomachine according to any one of the preceding claims, said bladed element having a general annular shape around an axis and comprising:
- an annular shell (12) extending around the axis and comprising an annular fixing flange (14, 16) extending radially outwardly at each of its axial ends, and
- an annular row of vanes (18) extending around the axis inside the shell and whose radially outer ends are fixed to the shell,
said tool comprising:
- a first plate (28) intended to be applied against a radial face of a first flange (14) of the annular shell (12) and having a general elongated and curved shape with a concavity intended to be oriented toward the axis,
- a second plate (30) intended to be applied against a radial face of a second flange (16) facing the first flange (14) and having a general elongated and curved shape with a concavity intended to be oriented towards the axis,
- cylinders (32) for connecting the plates whose lengths can be varied so that the inter-plate distance can be adjusted, and
- pins (34) configured to be inserted into holes (36) of the flanges (14, 16) so as to immobilize said tool in the circumferential direction on the shell (12).

9. The tool (26) according to claim 8, wherein the cylinders (32) are of the rigging screw (38) type.

10. The tool (26) according to claim 8 or 9, wherein the cylinders (32) are connected by rotatable connections to said plates (28, 30).
